# EUROPEAN PATENT SPECIFICATION

(11) **EP 1 439 754 B1**
(45) Date of publication and mention of the grant of the patent: **22.06.2005**
(21) Application number: 02770298.4
(22) Date of filing: 18.10.2002
(51) Int. Cl.: A22C 11/00

(54) **METHOD AND MEANS FOR PRODUCING CURVED EXTRUDED MEAT PRODUCTS, AND CURVED EXTRUDED MEAT PRODUCT**
VERFAHREN UND MITTEL ZUR HERSTELLUNG VON GEKRÜMMTEN EXTRUDIERTEN FLEISCHPRODUKTEN UND GEKRÜMMTE EXTRUDIERTE FLEISCHPRODUKTE
PROCEDE ET MOYEN DE PRODUCTION DE PRODUITS CARNES EXTRUDES RECOURBES ET PRODUIT CARNE EXTRUDE RECOURBE

(30) Priority: 22.10.2001 US 37098
(43) Date of publication of application: 28.07.2004
(73) Proprietor: Townsend Engineering B.V., 5340 AG Oss (NL)
(72) Inventor: KUIJPERS, Martinus, W., J., T., NL-5831 BA Oploo (NL); ANKERSMIT, Frederik, F., L., H., NL-5831 RR Boxmeer (NL)
(74) Representative: Van den Heuvel, Henricus Theodorus
(86) International application number: PCT/NL2002/000662
(87) International publication number: WO 2003/034827

(56) References cited:
- EP-A- 0 720 816
- EP-A- 1 057 409
- US-A- 4 110 871
- US-A- 4 501 542
- US-A- 6 042 466

## Description

The invention relates to a method and means for producing curved extruded meat products like sausages. The invention also relates to a curved extruded meat product produced according the method of the invention.

Curved extruded meat products like sausages, as compared to straight sausages, have great appeal in certain sausage markets throughout the world. Efforts have been made to create a curved configuration in otherwise straight sausages by using mechanical forces or pre-curved casings. Other attempts have been made to create curved sausages by introducing two separate streams of meat-dough into an extrusion tube whereby the separate layers of sausage material will shrink in variable increments to induce a curve in the resulting link. However handling two different meat-dough materials requires double feed equipment and is thus relatively expensive. Also the combination of the two adjoining meat-dough materials in the extruded meat product negatively affects the appearance of the product

The European patent 0 720 816 discloses co-extrusion of two separate meat doughs of which at least one meat dough is extruded through a venturi. An extra problem to the problems listed above that could arise with this technique is that the flow of material through the venturi can be blocked by meat particles.

The present invention has for its object to provide a method and means for curving extruded meat products, to simplify the production of curved extruded meat products and to enhance the quality of the resulting curved meat products.

The present invention provides for this purpose a method for producing curved extruded meat products, according claim 1. Preferably the flow of meat dough in the tube is separated to at least two gradually transitioning portions by partially restricting the flow of meat dough over and past a restriction element in the tube, wherein a first longitudinal portion of meat dough will move linear over the restriction element to create a first portion of meat dough primarily having longitudinally extending fibers that gradually transitions to a second longitudinal portion of meat dough that engages and passes over the restriction element having primarily fibers disposed in a random orientation. The flow of meat dough through the tube is partially restricted by a restriction element within the tube which permits a portion of the meat dough to pass there over in a substantially uninterrupted manner, but which requires a separate portion of meat dough to have its movement through the tube inhibited by engaging the restriction element and having to move there over to exit the tube. This phenomenon causes the unrestricted meat dough to have the elongated protein fibers therein to position themselves in a linear configuration, with the interrupted meat dough portion having the protein fibers therein changed to a random configuration. A gradient of the linear fibers generally called a first portion gradually progresses to the second general portion where the fibers are in a random configuration. This method has the advantage that the process of producing the meat products is kept very simple. Only a single feed mechanism for the meat dough is required making it more easy to control the quality of the meat dough and simplifying the change over to another type of meat dough. Also only one extrusion pipe is required that can not be blocked by the meat dough like a venturi according the prior art can.

To realize the curving of the individual meat products the applied heat has preferably a temperature of greater than 65° C. At this temperature the shrinkage of protein fibers is initiated resulting in the curving of the meat products. The first longitudinally portion with the primarily longitudinally extending fibers is more susceptible to lengthwise shrinkage than the second longitudinally portion with the non-linear fibers disposed in a random orientation, causing the meat products to curve.

Preferably the heat is applied in a bath of hot liquid, for instance water. The meat products can float in such a bath resulting in very limited frictional resistance and also in a uniform resistance. This results in an optimal and uniform use of the curving force for all the meat products. However the heat can also be applied in a steam cooker with saturated hot air, a hot air oven, by moving the meat products over a hot frying surface, by applying hot liquid smoke to the links, in a microwave oven, and/or by the use of hot frying oil. Dependant on the process conditions, the requested final product and the local situation the optimal solution can be chosen. This also applies for the way of producing of the meat products; it is an option to extrude a strand of meat dough from the tube in combination with extruding a coating. Such a co-extruded strand can further be separated into a plurality of individual meat products by a crimper wheel. An alternative option is that the strand of meat dough from the tube is further processed on a conventional sausage linker.

The present invention also provides a meat extrusion tube, according claim 9. This allows a first portion of the sausage dough to flow freely through the tube while another portion of sausage material will be inhibited by the restriction element, thereby allowing the first portion to have linearly disposed protein fibers, which gradually progresses to a second portion comprised of interrupted sausage dough which will have sausage fibers disposed in a random orientation, thus causing a different lengthwise shrinkage phenomenon between the two general portions when heat is supplied thereto. Further advantages to be realized with this constructional simple device are already referred to above.

The cross sectional area of the restriction element with respect to the cross sectional area in a hollow portion of the tube is preferably between 1:2 to 1:8. This makes that the space left for the meat dough to pass is large enough to maintain, or even further stimulates, the longitudinal orientation of the protein fibers in a cross sectional potion of the extruded meat product.

The restriction element is located in an off-center (or eccentric) position within the tube. This makes that the process of shrinking fibers in the meat product results in a curving force; also the resulting force will work off-center.

In another preferred embodiment the distance from a downstream end of the restriction element to the discharge end of the tube is between 5 and 30 mm, even more preferably the distance is between 10 and 20 mm. This dimension results in a solid stand without changing the random orientation in the second portion to longitudinal orientation.

To realize an optimal linear orientation in the first portion, a gradually transition area from the first portion to the second portion, and a random orientation of the fibers in the second portion in practice positive results have been realized with one or more of the following constructions: a restriction element engaging the inside wall of the hollow tube with a concave actuate surface, an open passageway above the restriction element with an elliptical cross-sectional shape, an inclined ramp on an upstream end of the restriction element, and an undercut downstream end of the restriction element. To make it possible to adjust the tube dependant on the process conditions and requested product specifications the restriction element is preferably longitudinal displaceable in the tube. The invention also provides a sausage extrusion machine incorporating the meat extrusion tube as disclosed.

Furthermore the present invention provides a curved extruded meat product comprising at least a first portion of meat dough primarily having longitudinally extending protein fibers, and a second longitudinal portion comprised of protein fibers, disposed in a random orientation, characterized in that, the first portion gradually transitions in the second portion. This gradual transition from the different longitudinal portions has the advantage that there is no visible transition from the portions making that the curved meat product is more appealing for the customer. Another advantage of the gradual transition is that the sausage portions are not easy to separate, this in contrast with the extruded curved meat products with two portions according the prior art.

The present invention will be further elucidated with reference to the non-limitative embodiments shown in the following figures. Herein:
figure 1 is a side elevational view of an extrusion tube used in this invention;
figure 2 is a perspective view thereof;
figure 3 is an elongated sectional view thereof,
figure 4 is a side elevational view at an enlarged scale of the restriction element located within the extrusion tube;
figure 5 is an end elevational view of the restriction element as seen from the left hand end of figure 4;
figure 5A is an end elevational view of the restriction element showing an alternate
form thereof and being similar to the view shown in figure 5;
figure 6 is a sectional view of the extrusion tube similar to that of figure 3 but showing meat dough flowing there through;
figure 7 is a schematic view of a sausage machine embodying the features of this invention; and
figure 8 is a partial sectional view of a heated sausage according this invention.

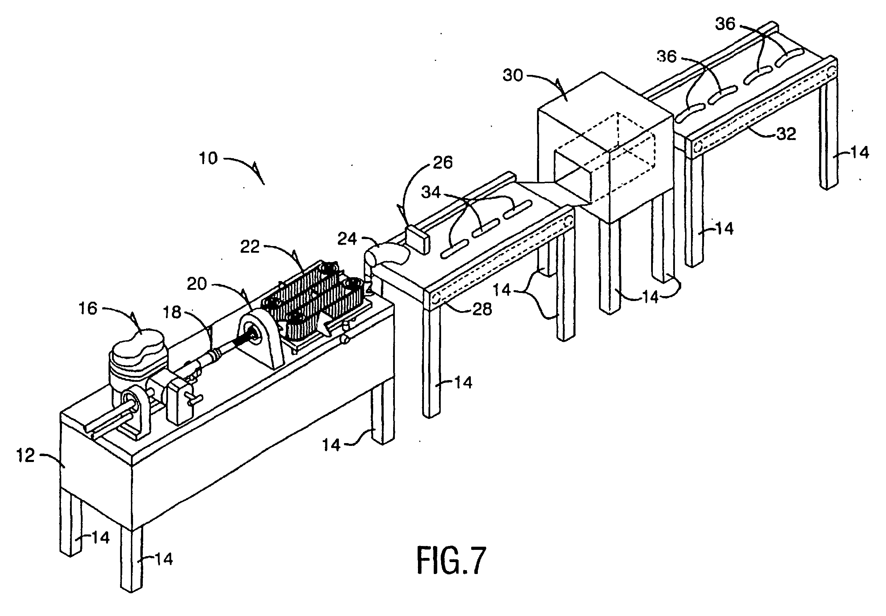

With reference to figure 7, a conventional machine for making sausages has a frame 12 and supporting legs 14. A meat dough pump 16 is operatively connected to a stuffing or extrusion tube 18 of this invention which is located directly upstream from a conventional twister assembly 20. Immediately downstream therefrom is a conventional linker assembly 22 which divides the sausage strand from the twister 20 to be divided into separate sausages. Those sausages are discharged conventionally from the linker assembly 22 through a discharge horn 24. A conventional link cutter 26 divides the sausage strand into a plurality of sausages which are deposited on the endless conveyor 28. The conveyor 28 deposits the sausages thereon through a heater 30, which in turn deposits the sausages to an exit conveyor 32. The heater 30 could be a microwave oven, a vat of hot oil, a frying surface, a steam cooker with saturated hot air, hot liquid smoke, etc. The sausages 34 on conveyor 28 have a straight-configuration, and as will be explained hereafter, the sausages 34 are changed to a curved configuration as shown by the sausages 36 shown on conveyor 32. This change in configuration is effected as the sausages pass through the heater 30. Although figure 7 discloses a conventional sausage linker the invention can for instance just as well be realized in a, not shown, co-extrusion sausage machine with a crimper wheel for separating the extruded sausage strand.

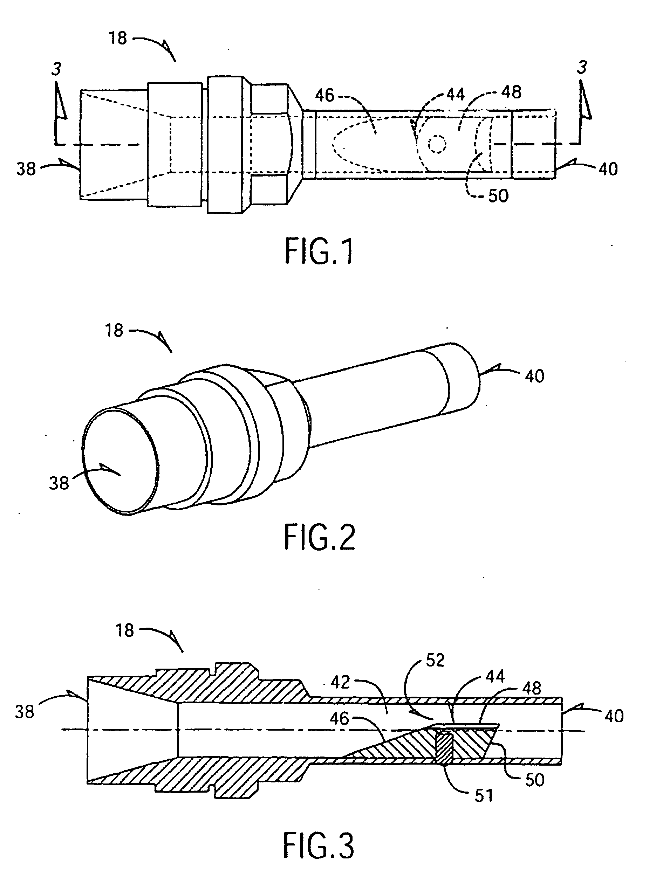

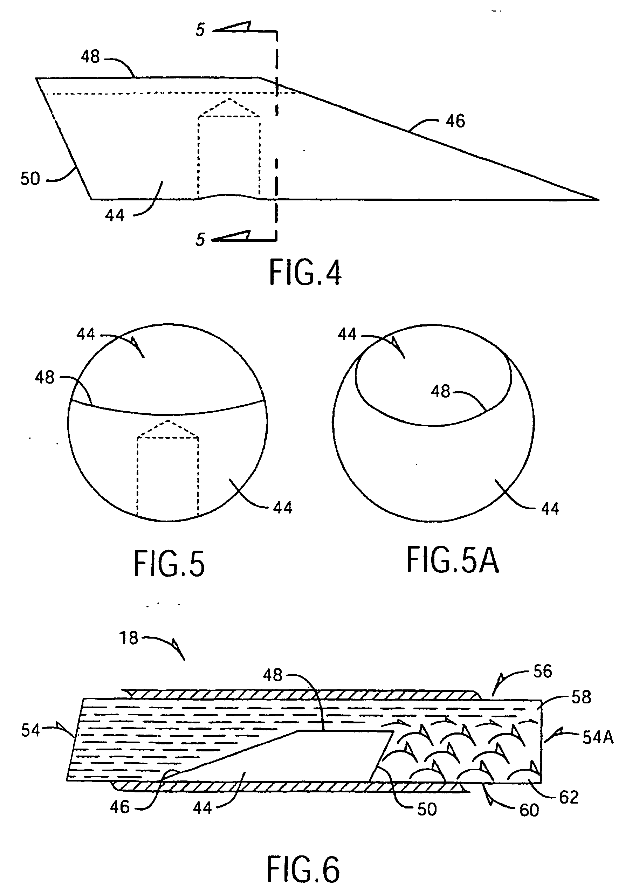

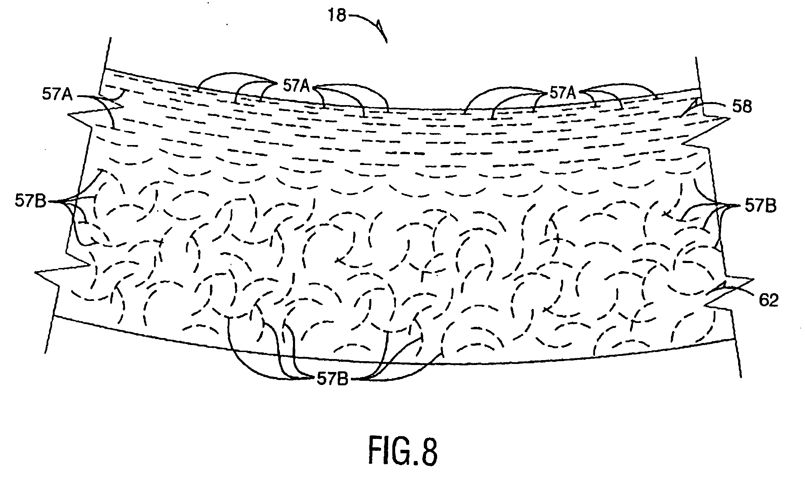

With reference to figure 3, the numeral 38 designates the intake end of extrusion tube 18 which receives meat dough from the pump 16. Tube 18 has a discharge end 40 which discharges a strand of meat dough for further processing. The tube 18 conventionally has a hollow cylindrical bore 42. A restriction element 44 (figure 3) has a ramp 46 which extends forwardly and upwardly from the bottom of bore 42. The top surface 48 of the restriction element 44 has an arcuate shape as best shown in figure 5 or 5A. The back end of the restriction element 44 terminates in a diagonal undercut backside 50 which is located for instance 10 mm from the discharge end 40 of the tube 18. The restriction element 44 is secured with tube 18 by set screw 51. A passage 52 is created above the restriction element 44. A single sausage strand 54 (figure 6) has a portion 56 comprising a gradient portion 58 wherein the protein fibers are in a longitudinal or linear configuration. The portions 56 and 58 are forced longitudinally through the tube 18 in an uninterrupted fashion past and above the top 48 of the restriction element 44 so that the linear orientation of the protein fibers in the gradient portion 58 is significantly not interrupted. Again with reference to figures 6 and 8, an extruded portion 60 of the sausage strand 54 comprises a lower portion 62 comprised of fibers of random orientation. The lower portion 62 of meat dough encounters the ramp 46 of restriction element 44 and moves upwardly and over the top surface 48 thereof, and thence over the front end thereof to fill the portion of the extrusion tube 18 forwardly of the restriction element (figure 6). Thus, the sausage strand 54A exiting the tube 18 is comprised of an upper (first) portion 58 wherein the protein fibers are linearly disposed, and a lower (second) portion 62 wherein the protein fibers are variably dispersed in a random fashion by the restriction element 44. A gradient exists between the upper portion 58 and the lower portion 62 wherein the linearly aligned fibers of the upper portion 58 gradually transitions to the randomly aligned fibers in the lower portion 62. Thus, the discharged sausage strand 54A comprised of the two portions 58 and 62 moves into the heating oven 30. The temperature within the heating oven 30 should be in the range of approximately 65°- 85° C. In this heated environment, the upper portion 58 shrinks lengthwise at a greater degree than the lower portion 62, and thereupon causes the otherwise straight links 34 to assume the curved condition shown by the links 36 (figures 7 and 8). This method is applicable to sausage strands of different diameters.

It is therefore seen that this invention permits the creation of curved links of sausages without any external forces and with feeding of only a single sausage dough. It is therefore seen that this invention will achieve at least all of its stated objectives.

## Claims

1. Method for producing curved extruded meat products (36), comprising:
- transporting meat dough through a single elongated meat dough extrusion tube (18) to realize a primarily longitudinally extending orientation of the protein fibers (57A) in the meat dough,
- separating the flow of meat dough in the extrusion tube (18) by partially restricting the flow of meat dough by a restriction element to at least a first portion of meat dough (58) primarily having longitudinally extending fibers (57A), gradually transitioning to a second longitudinal portion (62) comprised of fibers (57B), disposed in a random orientation,
- extruding the flow of the two gradually transitioning longitudinally portions (58, 62) of meat dough as a strand (54A) from the tube (18),
- separating the strand (54A) into a plurality of individual meat products (34), and
- applying heat to the individual meat products (34) whereby the individual meat products (36) will assume a curved shape by virtue of the different lengthwise shrinkage of the fibers (57A, 57B) in the two portions (58,62).

2. Method as claimed in claim 1, **characterized in that** the flow of meat dough in the extrusion tube (18) is separated to at least two gradually transitioning portions (58, 62) by partially restricting the flow of meat dough over and past a restriction element (44) in the tube (18), wherein a part of the meat dough will move linear over the restriction element (44) to create a first portion (58) of meat dough primarily having longitudinally extending fibers (57A) that gradually transitions to a second longitudinal portion (62) of meat dough that engages and passes over the restriction element (44) having primarily fibers (57B) disposed in a random orientation.

3. Method as claimed in claim 1 or 2, **characterized in that** the applied heat has a temperature of greater than 65° C.

4. Method as clamed in any of the foregoing claims, **characterized in that** the heat applied is a bath of hot liquid.

5. Method as clamed in any of the claims 1 - 3, **characterized in that** the heat is applied by one of the following methods: in a steam cooker with saturated hot air, in a hot air oven, by moving the meat products over a hot frying surface, by applying hot liquid smoke to the links, in a microwave oven, and by the use of hot frying oil.

6. Method as claimed in any of the foregoing claims, **characterized in that** in combination with the extruding of a strand (54A) of meat dough from the tube (18) a coating of the strand (54A) is extruded.

7. Method as claimed in any of the foregoing claims, **characterized in that** the strand (54A) extruded from the tube (18) is separated into a plurality of individual meat products (34, 36) by a crimper wheel.

8. Method as claimed in any of the claims 1 - 5, **characterized in that** a strand (54A) of meat dough from the tube (18) is further processed on a conventional sausage linker.

9. Meat extrusion tube (18), comprising:
- an elongated hollow tube (18) having a meat dough intake end (38) and a meat dough discharge end (40),
- a restriction element (44) in the tube (18) to partially restrict the longitudinal movement of meat dough there through,
**characterized in that** the extrusion tube is a single tube and the restriction element is positioned in the tube so to divide the flow of meat dough into at least two gradually transitioning longitudinal portions (58, 62) comprised of a first portion of meat dough that does not engage the restriction element (44) and passes thereby without being deflected, and a second portion (62) that passes, engages and is deflected to pass over the restriction element (44).

10. Tube (18) as claimed in claim 9, **characterized in that the** cross sectional area of the restriction element (44) with respect to the cross sectional area in a hollow portion of the tube (18) is between 1:2 to 1:8.

11. Tube (18) as claimed in claim 9 or 10, **characterized in that** the restriction. element (44) is located in an off-center position within the tube (18).

12. Tube (18) in any of the claims 9 - 11, **characterized in that** the distance from a downstream end (50) of the restriction element (44) to the discharge end (40) of the tube (18) is between 5 and 30 mm.

13. Tube (18) as claimed in claim 12, **characterized in that** the distance from the downstream end (50) of the restriction element (44) to the discharge end (40) of the tube (18) is between 10 and 20 mm.

14. Tube (18) as claimed in any of the claims 9 -13, **characterized in that** the restriction element (44) engages the inside wall of the hollow tube (18), and has a concave actuate surface on a top surface (48) thereof.

15. Tube (18) as claimed in any of the claims 9 - 14, **characterized in that** an open passageway (52) is formed above the restriction element (44) having an elliptical cross-sectional shape.

16. Tube (18) as claimed in any of the claims 9 - 15, **characterized in that** an inclined ramp (46) is on an upstream end of the restriction element (44).

17. Tube (18) as claimed in any of the claims 9 - 16, **characterized in that** the downstream end (50) of the restriction element (44) is undercut.

18. Tube (18) as claimed in any of the claims 9 - 17, **characterized in that** the restriction element (44) is longitudinal displaceable in the tube (18).

19. Sausage extrusion machine, comprising: feeding means (16) for meat dough, connected to a meat extrusion tube (18) according any of the claims 9-18, and separating means (26) for separating a meat strand (54A) extruded from the extrusion tube (18) in individual meat products (34, 36).

20. Curved extruded meat product (36) comprising at least a first portion (58) of meat dough primarily having longitudinally extending protein fibers (57A), and a second longitudinal portion (62) comprised of protein fibers (57B), disposed in a random orientation, **characterized in that**, the first portion (58) gradually transitions in the second portion (62).

## Patentansprüche

1. Verfahren zur Herstellung von gekrümmten extrudierten Fleischprodukten (36), bestehend aus:
- dem Transport von Fleischteig durch ein einzelnes längliches Extrusionsrohr (18) für Fleischteig, um eine vorwiegend in Längsrichtung verlaufende Orientierung der Proteinfasern (57A) im Fleischteig herbeizuführen,
- der Trennung des Fleischteigstroms im Extrusionsrohr (18) durch eine teilweise Begrenzung des Fleischteigstroms mit Hilfe eines Begrenzungselements in mindestens einen ersten Anteil des Fleischteigs (58), der vorwiegend in Längsrichtung verlaufende Fasern (57A) besitzt, die allmählich in einen zweiten länglichen Anteil (62) übergehen, der aus Fasern (57B) mit zufälliger Orientierung besteht,
- dem Extrudieren des Stroms aus den beiden allmählich ineinander übergehenden länglichen Anteilen (58, 62) aus Fleischteig in der Form eines Strangs (54A) aus dem Rohr (18),
- der Trennung des Strangs (54A) in eine Vielzahl einzelner Fleischprodukte (34) und
- der Anwendung von Wärme bei den einzelnen Fleischprodukten (34), wobei die einzelnen Fleischprodukte (36) eine gekrümmte Form annehmen aufgrund des unterschiedlichen Längsschrumpfverhaltens der Fasern (57A, 57B) in den beiden Anteilen (58, 62).

2. Verfahren nach Anspruch 1, **dadurch gekennzeichnet, dass** der Strom aus Fleischteig in dem Extrusionsrohr (18) in mindestens zwei allmählich ineinander übergehende Anteile (58, 62) getrennt wird, indem eine teilweise Begrenzung des Fleischteigstroms über und hinter einem Begrenzungselement (44) in dem Rohr (18) stattfindet, wobei ein Teil des Fleischteigs linear über das Begrenzungselement (44) bewegt wird, um einen ersten Anteil (58) an Fleischteig zu erzeugen, der vorwiegend in Längsrichtung verlaufende Fasern (57A) besitzt, der allmählich in einen zweiten länglichen Anteil (62) aus Fleischteig übergeht, der auf das Begrenzungselement (44) trifft und über ihm passiert, und der vorwiegend aus Fasern (57B) mit zufälliger Orientierung besteht.

3. Verfahren nach Anspruch 1 oder 2, **dadurch gekennzeichnet, dass** die angewendete Wärme eine Temperatur von mehr als 65 °C besitzt.

4. Verfahren nach irgendeinem der vorangehenden Ansprüche, **dadurch gekennzeichnet, dass** die angewendete Wärmequelle ein heißes Bad in einer Flüssigkeit ist.

5. Verfahren nach irgendeinem der Ansprüche 1 - 3, **dadurch gekennzeichnet, dass** die Wärme nach einem der folgenden Verfahren aufgebracht wird: in einem Dampfgerät mit gesättigter heißer Luft, in einem Heißluftofen, durch Bewegen der Fleischprodukte über eine heiße Bratfläche, durch die Verwendung von heißem Flüssigkeitsrauch auf den Gliedern, in einem Mikrowellenofen und durch Anwendung von heißem Bratöl.

6. Verfahren nach irgendeinem der vorangehenden Ansprüche, **dadurch gekennzeichnet, dass** gemeinsam mit der Extrusion eines Fleischteigstrangs (54A) aus dem Rohr (18) eine Umhüllung des Strangs (54A) extrudiert wird.

7. Verfahren nach irgendeinem der vorangehenden Ansprüche, **dadurch gekennzeichnet, dass** der aus dem Rohr (18) extrudierte Strang (54A) mit Hilfe eines Kröpfrads in eine Vielzahl einzelner Fleischprodukte (34, 36) getrennt wird.

8. Verfahren nach irgendeinem der Ansprüche 1 - 5, **dadurch gekennzeichnet, dass** ein Fleischteigstrang (54A) aus dem Rohr (18) an einer konventionellen Wurstverkettvorrichtung weiter verarbeitet wird.

9. Fleischextrusionsrohr (18), bestehend aus:
- einem länglichen hohlen Rohr (18) mit einer Einlassöffnung (38) für Fleischteig an einem Ende und einer Auslassöffnung (40) für Fleischteig am anderen Ende,
- einem Begrenzungselement (44) in dem Rohr (18) zur teilweisen Begrenzung der Längsbewegung des Fleischteigs da hindurch,
**dadurch gekennzeichnet, dass** das Extrusionsrohr ein einzelnes Rohr ist und dass das Begrenzungselement in dem Rohr so angebracht ist, dass der Fleischteigstrom in mindestens zwei allmählich ineinander übergehende längliche Anteile (58, 62) aufgeteilt wird, bestehend aus einem ersten Fleischteiganteil, der nicht auf das Begrenzungselement (44) trifft und ohne abgelenkt zu werden passiert, und aus einem zweiten Anteil (62), der passiert, darauf trifft und abgelenkt wird, um über dem Begrenzungselement (44) vorbeizuströmen.

10. Rohr (18) nach Anspruch 9, **dadurch gekennzeichnet, dass** das Querschnittsverhältnis des Begrenzungselements (44) bezogen auf den Querschnitt in einem hohlen Teil des Rohres (18) zwischen 1:2 und 1:8 ist.

11. Rohr (18) nach Anspruch 9 oder 10, **dadurch gekennzeichnet, dass** das Begrenzungselement (44) sich innerhalb des Rohres (18) in einer exzentrischen Position befindet.

12. Rohr (18) nach irgendeinem der Ansprüche 9 bis 11, **dadurch gekennzeichnet, dass** der Abstand von einem stromabwärts gelegenen Ende (50) des Begrenzungselements (44) zum Auslassende (40) des Rohrs (18) zwischen 5 und 30 mm beträgt.

13. Rohr (18) nach Anspruch 12, **dadurch gekennzeichnet, dass** der Abstand von dem stromabwärts gelegenen Ende (50) des Begrenzungselements (44) zum Auslassende (40) des Rohrs (18) zwischen 10 und 20 mm beträgt.

14. Rohr (18) nach irgendeinem der Ansprüche 9 bis 13, **dadurch gekennzeichnet, dass** sich das Begrenzungselement (44) an der Innenwand des hohlen Rohres (18) befindet und an einer Oberfläche (48) eine konkav gekrümmte Fläche besitzt.

15. Rohr (18) nach irgendeinem der Ansprüche 9 bis 14, **dadurch gekennzeichnet, dass** ein offener Durchgang (52) mit einem elliptischen Querschnitt über dem Begrenzungselement (44) gebildet wird.

16. Rohr (18) nach irgendeinem der Ansprüche 9 bis 15, **dadurch gekennzeichnet, dass** sich eine schräge Rampe (46) an einem stromaufwärts gelegenen Ende des Begrenzungselements (44) befindet.

17. Rohr (18) nach irgendeinem der Ansprüche 9 bis 16, **dadurch gekennzeichnet, dass** das stromabwärts gelegene Ende (50) des Begrenzungselements (44) hinterschnitten ist.

18. Rohr (18) nach irgendeinem der Ansprüche 9 bis 17, **dadurch gekennzeichnet, dass** das Begrenzungselement (44) im Rohr (18) in Längsrichtung verstellt werden kann.

19. Extrusionsmaschine für Wurst, bestehend aus Zufuhrmitteln (16) für Fleischteig, die mit einem Fleischextrusionsrohr (18) nach irgendeinem der Ansprüche 9 - 18 verbunden sind, und Trennmitteln (26) zum Trennen eines Fleischstrangs (54A), der aus dem Extrusionsrohr (18) extrudiert wurde, in einzelne Fleischprodukte (34, 36).

20. Gekrümmtes extrudiertes Fleischprodukt (36), bestehend aus zumindest einem ersten Anteil (58) an Fleischteig mit überwiegend in Längsrichtung verlaufenden Proteinfasern (57A), und einem zweiten länglichen Anteil (62), bei dem die Proteinfasern (57B) in einer zufälligen Orientierung angeordnet sind, **dadurch gekennzeichnet, dass** der erste Anteil (58) allmählich in den zweiten Anteil (62) übergeht.

## Revendications

1. Procédé pour produire des produits carnés extrudés courbes (36), comprenant :
- le transport de pâte de viande à travers un tube simple allongé (18) d'extrusion de pâte de viande pour réaliser une orientation d'extension principalement longitudinale des fibres de protéine (57A) dans la pâte de viande ;
- la séparation du flux de pâte de viande dans le tube d'extrusion (18) en étranglant partiellement le flux de pâte de viande au moyen d'un élément d'étranglement en au moins une première partie de pâte de viande (58) ayant principalement des fibres d'extension longitudinale (57A), présentant une transition graduelle à une seconde partie longitudinale (62) constituée de fibres (57B), disposées selon une orientation aléatoire,
- l'extrusion du flux des deux parties longitudinales (58, 62) à transition graduelle de pâte de viande sous forme de cordon (54A) à partir du tube (18),
- la séparation du cordon (54A) en une pluralité de produits carnés individuels (34), et
- l'application de chaleur aux produits carnés individuels (34), ce par quoi les produits carnés individuels (36) prendront une forme courbe en raison de la différence de retrait longitudinal des fibres (57A, 57B) dans les deux parties (58, 62).

2. Procédé selon la revendication 1, **caractérisé en ce que** le flux de pâte de viande dans le tube d'extrusion (18) est séparé en au moins deux parties à transition graduelle (58, 62) par étranglement partiel du flux de pâte de viande dans et après un élément d'étranglement (44) dans le tube (18), en sachant qu'une partie de la pâte de viande se déplacera linéairement dans l'élément d'étranglement (44) pour créer une première partie (58) de pâte de viande ayant principalement des fibres d'extension longitudinale (57A) qui présente une transition graduelle à une seconde partie longitudinale (62) de pâte de viande qui s'engage et passe dans l'élément d'étranglement (44), ayant principalement des fibres (57B) disposées selon une orientation aléatoire.

3. Procédé selon la revendication 1 ou 2, **caractérisé en ce que** la chaleur appliquée a une température de plus de 65 °C.

4. Procédé selon l'une quelconque des revendications précédentes, **caractérisé en ce que** la chaleur appliquée est un bain de liquide chaud.

5. Procédé selon l'une quelconque des revendications 1 à 3, **caractérisé en ce que** la chaleur est appliquée au moyen de l'un des procédés suivants : dans un cuiseur à vapeur à air chaud saturé, dans un four à air chaud, par déplacement des produits carnés sur une surface à frire chaude, par application de liquide de fumage chaud sur les ligatures, dans un four à micro-ondes, ou par l'utilisation d'huile de friture chaude.

6. Procédé selon l'une quelconque des revendications précédentes, **caractérisé en ce que,** en combinaison avec l'extrusion d'un cordon (54A) de pâte de viande à partir du tube (18), on extrude un enrobage du cordon (54A).

7. Procédé selon l'une quelconque des revendications précédentes, **caractérisé en ce que** le cordon (54A) extrudé à partir du tube (18) est séparé en une pluralité de produits carnés individuels (34, 36) par une roue à sertir.

8. Procédé selon l'une quelconque des revendications 1 à 5, **caractérisé en ce qu'**un cordon (54A) de pâte de viande provenant du tube (18) est ensuite traité sur une lieuse de saucissons traditionnelle.

9. Tube d'extrusion de viande (18), comprenant :
- un tube creux allongé (18) comportant une extrémité d'admission de pâte de viande (38) et une extrémité de sortie de pâte de viande (40) ;
- un élément d'étranglement (44) dans le tube (18) pour y étrangler partiellement le mouvement longitudinal de la pâte de viande,
**caractérisé en ce que** le tube d'extrusion est un tube simple et **en ce que** l'élément d'étranglement est positionné dans le tube de sorte à diviser le flux de pâte de viande en au moins deux parties longitudinales à transition graduelle (58, 62) constituées d'une première partie de pâte de viande qui ne s'engage pas dans l'élément d'étranglement (44) et passe à côté de celui-ci sans être déviée, et une seconde partie (62) qui passe, s'engage et est déviée pour passer dans l'élément d'étranglement (44).

10. Tube (18) selon la revendication 9, **caractérisé en ce que** l'aire de la section droite de l'élément d'étranglement (44) par rapport à l'aire de la section droite d'une partie creuse du tube (18) est située entre 1:2 et 1:8.

11. Tube (18) selon la revendication 9 ou 10, **caractérisé en ce que** l'élément d'étranglement (44) est situé dans une position décentrée à l'intérieur du tube (18).

12. Tube (18) selon l'une quelconque des revendications 9 à 11, **caractérisé en ce que** la distance d'une extrémité aval (50) de l'élément d'étranglement (44) à l'extrémité de sortie (40) du tube (18) est située entre 5 et 30 mm.

13. Tube (18) selon la revendication 12, **caractérisé en ce que** la distance de l'extrémité aval (50) de l'élément d'étranglement (44) à l'extrémité de sortie (40) du tube (18) est située entre 10 et 20 mm.

14. Tube (18) selon l'une quelconque des revendications 9 à 13, **caractérisé en ce que** l'élément d'étranglement (44) prend appui sur la paroi interne du tube creux (18) et a une surface arquée concave sur une surface supérieure (48) de celui-ci.

15. Tube (18) selon l'une quelconque des revendications 9 à 14, **caractérisé en ce qu'**une voie de passage ouverte (52) est formée au-dessus de l'élément d'étranglement (44) ayant une section transversale de forme elliptique.

16. Tube (18) selon l'une quelconque des revendications 9 à 15, **caractérisé en ce qu'**une rampe inclinée (46) se trouve sur une extrémité amont de l'élément d'étranglement (44).

17. Tube (18) selon l'une quelconque des revendications 9 à 16, **caractérisé en ce que** l'extrémité aval (50) de l'élément d'étranglement (44) est entaillée en oblique par en dessous.

18. Tube (18) selon l'une quelconque des revendications 9 à 17, **caractérisé en ce que** l'élément d'étranglement (44) est déplaçable longitudinalement dans le tube (18).

19. Machine d'extrusion de saucissons, comprenant un moyen d'amenée (16) pour la pâte de viande, relié à un tube d'extrusion de viande (18) selon l'une quelconque des revendications 9 à 18, et un moyen de séparation (26) pour séparer un cordon de viande (54A) extrudé du tube d'extrusion (18) en produits carnés individuels (34, 36).

20. Produit carné extrudé courbe (36) comprenant au moins une première partie (58) de pâte de viande comportant principalement des fibres de protéine d'extension longitudinale (57A), et une seconde partie longitudinale (62) constituée de fibres de protéine (57B), disposées selon une orientation aléatoire, **caractérisé en ce que** la première partie (58) présente une transition graduelle à la seconde partie (62).
